# EUROPÄISCHE PATENTSCHRIFT

(11) **EP 3 174 739 B1**
(45) Veröffentlichungstag und Bekanntmachung des Hinweises auf die Patenterteilung: **24.07.2019**
(21) Anmeldenummer: 15728782.2
(22) Anmeldetag: 28.05.2015
(51) Int. Cl.: B60C 13/00

(54) **POLYMERPRODUKT, VORZUGSWEISE FAHRZEUGREIFEN**
POLYMER PRODUCT, PREFERABLY VEHICLE TYRE
PRODUIT POLYMÈRE, DE PRÉFÉRENCE PNEUMATIQUE DE VÉHICULE

(30) Priorität: 31.07.2014 DE 102014215094
(43) Veröffentlichungstag der Anmeldung: 07.06.2017
(73) Patentinhaber: Continental Reifen Deutschland GmbH, 30165 Hannover (DE)
(72) Erfinder: BOGENSCHÜTZ, Peter, 30900 Wedemark (DE); BEHR, Ulrich, 30167 Hannover (DE)
(74) Vertreter: Finger, Karsten
(86) Internationale Anmeldenummer: PCT/EP2015/061782
(87) Internationale Veröffentlichungsnummer: WO 2016/015898

(56) Entgegenhaltungen:
- WO-A1-2012/171802
- FR-A1- 2 995 254
- US-A1- 2009 218 019
- US-A1- 2012 227 879

## Beschreibung

Die Erfindung betrifft ein Polymerprodukt, vorzugsweise einen Fahrzeugreifen mit zwei Seitenwänden, wobei zumindest eine Darstellung auf der äußeren Oberfläche des Polymerproduktes angeordnet ist, wobei die Darstellung einen flächigen Bereich aufweist, der von einem Muster bedeckt ist.

Polymerprodukte sind beispielsweise Fahrzeugluftreifen sowie Gehäuseteile aus Kunststoff von technischen Geräten. Polymerprodukte weisen Werkstoffe wie PVC, PU, TPO und/oder elastomeres Material wie Gummi auf.

Der Begriff "Darstellung" umfasst dabei Abbildungen, Schriftzeichen, Firmennamen, Firmenlogos, Kennzeichnungen, Flächen, etc..

Als derartige Polymerprodukte sind beispielsweise Fahrzeugluftreifen bekannt. Für die monochrome Darstellung von Buchstaben oder ähnlichem auf der Seitenwand werden Schraffuren, d.h. Muster mit linienförmigen sich nicht kreuzenden Erhebungen als Elemente, in dem um auf der Reifenseitenwand dargestellte Buchstaben herum ausgebildeten Oberflächenbereich der Seitenwand eingesetzt. Die linienförmigen Elemente erstrecken sich dabei in der Regel von Rand zu Rand der mit der Schraffur bedeckten Oberfläche. Derartige Muster werden auch eingesetzt bei Reifenausbildungen, in denen in der im Wesentlichen glatten Oberfläche der Seitenwand groß dargestellte Buchstaben ausgebildet sind, wobei die die Buchstaben darstellenden Flächen mit derartigen Mustern versehen sind. Die Muster sowohl auf den von Buchstabengestaltung freien Oberflächen als auch im Bereich der Buchstabengestaltung ermöglichen dabei durch die Streuung des Lichtes an den Flanken der linienförmigen Erhebungen die Beeinflussung der erzielten Helligkeitswirkung der schraffierten monochromen Fläche. In der Regel wirken dabei mit einem solchen Muster versehene Oberflächenbereiche dunkler als im Wesentlichen glatte, von derartigen Mustern freie, Oberflächenbereiche. Die Kombination von Oberflächenbereichen mit Muster mit im Wesentlichen glatten von derartigen Mustern freien Oberflächenbereichen ermöglicht somit eine kontrastreiche Gestaltung der monochromen Oberfläche und der monochromen Darstellung und im Zusammenhang mit der Verwendung von Buchstaben oder anderen Symbolen auch eine kontrastreiche Hervorhebung der zu vermittelnden Information.

Ein derartiger Fahrzeugluftreifen ist aus der DE 10 2012 105 864 A1 bekannt. Die Seitenwand des dort offenbarten Fahrzeugluftreifens weist eine Schraffur als Muster mit Elementen auf, wobei die Elemente als linienförmige sich nicht kreuzende Erhebungen ausgebildet sind. Die mit dem Muster versehenen Oberflächenbereiche wirken in der Regel dunkler als die im Wesentlichen glatten, von derartigen Mustern freien, Oberflächenbereiche. Durch die linienförmige Erstreckung und die nicht kreuzende Anordnung ist die Schraffur zumindest abschnittsweise weitgehend gerichtet ausgebildet.

Durch diese Gerichtetheit der Schraffur ist die erzeugte Helligkeitswirkung bzw. der erzeugte Kontrast relativ zu einem Oberflächenbereich, der keine solche Schraffur aufweist, jedoch stark richtungsabhängig, d.h. stark von der Richtung des einfallenden Lichts und/oder von der Betrachtungs- bzw. Detektionsposition relativ zur Erstreckungsrichtung der Elemente der Schraffur abhängt. Zudem ist durch die Richtungsabhängigkeit sowie die längliche Erstreckung der linienförmigen Erhebungen der Schraffur bei der Entformung des Reifens aus der Reifenform nachteilig. Problematisch ist insbesondere, dass Reste des elastomeren Materials nach erfolgter Vulkanisation an den Formflächen der Vulkanisationsform anhaften. Eine derartige, die Vulkanisierform verschmutzende Anhaftung ist unerwünscht, weil mit einer verschmutzten Vulkanisierform nur unsaubere, nicht erwünschte Reifenoberflächen formbar sind. Die Vulkanisierform muss daher zeit- und kostenaufwendig nach wenigen Vulkanisationszyklen gereinigt werden und steht während der Reinigungszeit als Formwerkzeug nicht zur Verfügung.

Die FR 2 995 254 A1 offenbart einen Fahrzeugluftreifen mit einem auf seiner Flanke ausgebildeten Muster, welches Öffnungen mit einer Dichte von mindestens 5 Öffnungen pro mm² und einem eingeschriebenen Durchmesser von 0,03 mm bis 0,5 mm aufweist.

Fahrzeugluftreifen mit einem auf der Seitenwand ausgebildeten Muster, welches Erhebungen aufweist, sind in der US 2012/227879 A1, US 2009/218019 A1 und der WO 2012/171802 A1 offenbart.

Der Erfindung liegt die Aufgabe zugrunde, mit einfachen Mitteln ein Polymerprodukt zur Verfügung zu stellen, das auf seiner äußeren Oberfläche zumindest einen flächigen Bereich mit einem Muster aufweist, mittels dessen eine kontraststärkere Darstellung mit einem richtungsunabhängigeren Kontrast erzielbar ist, und welches zudem zuverlässiger produzierbar ist.

Gelöst wird die Aufgabe, indem das Muster ein zweidimensionales Punktmuster ist, indem jeder Punkt des Musters ein dreidimensionales Element ist, welches als eine Vertiefung der Oberfläche ausgebildet ist, wobei jedes Element eine Grundfläche parallel zur Oberfläche aufweist und sich von dort aus bis zu seiner Scheitelhöhe S erstreckt, indem das Muster Elemente mit einer Scheitelhöhe S von 0,10 mm bis 0,4 mm, bevorzugt von 0,20 mm bis 0,30 mm, aufweist und indem das Muster Elemente aufweist, deren Abstand B zum jeweils nächsten Nachbarn 0,10 mm bis 0,50 mm, bevorzugt 0,15 mm, bis 0,25 mm, beträgt, wobei die Abstände B zwischen den geometrischen Schwerpunkten der Grundflächen der Elemente gemessen werden. Weiter beträgt die maximale lineare Erstreckung der Grundfläche jedes der Elemente des Musters 0,1 mm bis 0,35 mm, bevorzugt 0,22 mm bis 0,28 mm. Zudem weisen die Elemente des Musters eine Substruktur, insbesondere eine sich durch eine Diskretisierung der Höhenprofile der Elemente gebildete Substruktur, auf.

Das Muster des flächigen Bereichs ist ein zweidimensionales Punktmuster. Der flächige Bereich weist somit in zwei Dimensionen Punkte auf. Jeder Punkt ist durch ein dreidimensionales Element gebildet, welches als eine Vertiefung der Oberfläche ausgebildet ist. Jedes Element des Punktmusters ist dabei in der Ausdehnung seiner Grundfläche zumindest durch die Anordnung der anderen Elemente begrenzt und erstreckt sich somit in der Regel nicht von Rand zu Rand des Musters. Eine solche Anordnung zeigt eine geringe Gerichtetheit, insbesondere eine geringere Gerichtetheit als eine Schraffur aus linienförmigen Erhebungen. Somit ist die Richtungsabhängigkeit der durch das Muster erwirkten Helligkeitswirkung stark reduziert. Der Kontrast zwischen einem solchen flächigen Bereich zu einem Oberflächenbereich, der kein solches Muster aufweist, ist somit richtungsunabhängiger erzielbar. Eine Darstellung, die ein solches Muster aufweist, weist somit bei Lichtbestrahlung einen richtungsunabhängigeren Kontrast auf und ist somit für mehr Betrachtungssituationen kontraststark ausführbar.

Die Scheitelhöhe S von 0,10 mm bis 0,4 mm, bevorzugt von 0,20 mm bis 0,30 mm, zusammen mit einem Abstand zum nächsten Nachbarn von 0,10 mm bis 0,50 mm, bevorzugt 0,15 mm, bis 0,25 mm, haben sich als besonders geeignet erwiesen, um einfallendes Licht zu absorbieren und/oder diffus gestreut zu reflektieren. Es hat sich gezeigt, dass ein flächiger Bereich mit einem solchen Muster eine besonders dunkle Erscheinung aufweist. Vor allem wirken mit einem solchen Muster versehene Oberflächenbereiche in der Regel dunkler als im Wesentlichen glatte, von derartigen Mustern freie, Oberflächenbereiche, oder als Oberflächenbereiche, die mit einem schraffurartigen Muster aus linienförmigen Erhebungen versehen sind.

Hierdurch ist ein Polymerprodukt geschaffen, das auf seiner äußeren Oberfläche zumindest einen flächigen Bereich mit einem Muster aufweist, wobei das Muster so gestaltet ist, dass es eine noch kontraststärkere Darstellung ermöglicht.

Die Darstellung kann durch eine entsprechend ausgestaltete Formfläche einer Form formgebend in die äußere Oberfläche des Polymerproduktes "geprägt" sein. Es ist keine gesonderte Folie, kein gesondertes Polymermaterial und kein weiterer Arbeitsschritt notwendig.

Die Reduktion der Gerichtetheit der Elemente durch den Übergang von linienförmigen Elementen auf quasi punktförmige Elemente ist auch vorteilhaft für die Entformbarkeit des Polymerproduktes aus der Form. Die Entformbarkeit ist weitgehend unabhängig von einer Entformungsrichtung und die Verschmutzung der Form durch ein nicht vollständig entformtes Polymerprodukt ist verringert. Dies ermöglicht eine zuverlässigere Produzierbarkeit des Polymerproduktes.

Weiter beträgt die maximale lineare Erstreckung der Grundfläche jedes der Elemente des Musters 0,1 mm bis 0,35 mm, bevorzugt 0,22 mm bis 0,28 mm. Elemente mit einer solchen Erstreckung haben sich als besonders geeignet erwiesen, um richtungsunabhängiger einen dunkleren Eindruck zu erzeugen. Hierdurch ist eine noch kontraststärkere Darstellung ermöglicht.

Zudem weisen die Elemente des Musters eine Substruktur, insbesondere eine sich durch eine Diskretisierung der Höhenprofile der Elemente gebildete Substruktur, auf. Eine Substruktur lässt das Muster noch dunkler erscheinen. Eine Diskretisierung des Höhenprofils eines Elements entsteht dadurch, dass die Vertiefung des diskretisierten Elements nur eine begrenzte Anzahl an diskreten Abstandswerten relativ zur Grundfläche einnimmt, wodurch sich eine Stufenstruktur ergibt. Ein diskretisiertes Höhenprofil ist auch aus produktionstechnischen Gründen vorteilhaft. Ein solches diskretisiertes Höhenprofil ist auf einfache Art und Weise per Lasergravur als Negativprofil in die formgebende Formfläche eingravierbar. Zweckmäßig ist es, wenn jede Stufe eine quadratische Stufengrundfläche aufweist. Die quadratischen Stufengrundflächen des diskretisierten Elements bedecken dann zumindest die Grundfläche des ursprünglichen Elements. Die Höhe jeder Stufe ist durch den diskreten Werte gegeben, der dem Höhen-Mittelwert des ursprünglichen Elements im von der Grundfläche der Stufe abgedeckten Bereich am nächsten kommt. Auch andere Diskretisierungen des Höhenprofils sind möglich.

In einer besonders einfachen Ausführungsform sind alle Elemente des Musters gleich ausgebildet.

Erfindungsgemäß sind alle Elemente als Vertiefungen der Oberfläche ausgebildet. Vertiefungen eignen sich besonders, um Licht einzufangen und zu absorbieren. Hierdurch ist ein Polymerprodukt aufweisend ein Muster geschaffen, das einen besonders niedrigen Helligkeitswert erzielt, wodurch eine noch kontraststärkere Darstellung ermöglicht ist. Zudem haben sich solche Elemente als besonders vorteilhaft bezüglich der Verschmutzung der Form erwiesen, wodurch ein solches Produkt besonders zuverlässig produzierbar ist.

In einer weiteren bevorzugten Ausführungsform entspricht das Muster einem zweidimensionalen Punktgitter. Die regelmäßige Anordnung der Elemente gemäß einer regelmäßigen zweidimensionalen Gitterstruktur ermöglicht eine zuverlässige Beeinflussung der Wechselwirkung des Musters mit einfallendem Licht. Als besonders geeignet hat sich dabei ein zweidimensionales hexagonales Punktgitter erwiesen. Ein zweidimensionales hexagonales Punktgitter ist ein Punktgitter, dessen zwei Gittervektoren die gleiche Länge aufweisen und miteinander einen Winkel von 60° einschließen.

In einer bevorzugten Ausführungsform weist das Muster rotationssymmetrische Elemente, bevorzugt rotationssymmetrische Elemente von der Form eines halben Ellipsoids, einer Halbkugel, eines Kegels, eines Kegelstumpfes oder eines Zylinders, besonders bevorzugt rotationssymmetrische Elemente von der Form eines halben gestreckten Ellipsoids, auf. Die Grundfläche dieser Elemente ist immer ein Kreis. Die Scheitelhöhe S des Elements von der Form eines halben gestreckten Ellipsoids ist größer als der Radius der Grundfläche des Elements. Rotationssymmetrische Elemente weisen keine bevorzugte Reflexionsrichtung auf und sind somit besonders zur Erzeugung einer richtungsunabhängigeren kontraststarken Darstellung geeignet. Zudem weisen die Elemente in ihrem erhabenen bzw. vertieften Bereich keine oder nur wenig Ecken und/oder Kanten auf, was sich positiv auf die Entformbarkeit auswirkt.

Zweckmäßig ist es auch, wenn das Muster Elemente aufweist, die symmetrisch bezüglich Rotation um einen festen Winkel sind, wie etwa eine gleichseitige Pyramide mit drei-, vier- oder mehreckiger Grundfläche oder ein entsprechender Pyramidenstumpf. Auch solche Elemente weisen eine geringe Gerichtetheit der Reflexionseigenschaften auf.

Als besonders vorteilhafte Ausführungsform für eine Darstellung, insbesondere für eine Darstellung auf einer Reifenseitenwand, hat sich ein Muster erwiesen, das einem zweidimensionalen hexagonalen Punktgitter entspricht, wobei alle Elemente des Musters als Vertiefung in Form eines gestreckten halben Ellipsoids ausgebildet sind, dessen Durchmesser der Grundfläche maximal 2/3 der Scheitelhöhe S beträgt und wobei die Elemente dabei eine Substruktur aufweisen, die sich durch eine Diskretisierung des Höhenprofils der Elemente ergibt.

Zweckmäßig ist es, wenn der flächige Bereich relativ zu einem an den flächigen Bereich angrenzenden Bereich der Oberfläche des Poymerproduktes in vertikaler Richtung abgesenkt oder erhöht, bevorzugt abgesenkt, ist. Durch Absenkung oder Erhöhung des flächigen Bereichs ist der Kontrast einer solchen Darstellung zusätzlich verbesserbar. Eine Absenkung bietet zudem Schutz vor mechanischer Belastung der Oberfläche wie Zerkratzen.

Ein solches Muster ist hervorragend zur Darstellung eines Schriftzeichens oder eines Firmenlogos geeignet. Vorteilhaft ist es, wenn der flächige Bereich ein Schriftzeichen oder ein Firmenlogo ganz oder teilweise darstellt oder der flächige Bereich ein Schriftzeichen oder ein Firmenlogo ganz oder teilweise umgibt.

Polymeres Material, insbesondere elastomeres Material, eignet sich hervorragend für das Polymerprodukt.

In einer bevorzugten Ausführungsform ist das Polymerprodukt ein Kunststoffgehäuse eines technischen Gerätes, insbesondere eines technischen Konsumgutes wie eines Bildschirms, das bevorzugt im Spritzgussverfahren hergestellt wird. In einer anderen Ausführungsform ist das Polymerprodukt ein Gummiartikel wie ein Heizbalg, ein Transportband oder ein Fahrzeugreifen.

In einer besonders bevorzugten Ausführungsform ist das Polymerprodukt ein Fahrzeugreifen, insbesondere ein Fahrzeugreifen welcher den flächigen Bereich auf zumindest einer Seitenwand aufweist. Ein solches Muster eignet sich hervorragend für eine besonders kontrastreiche Darstellung auf der monochromen Seitenwand eines Fahrzeugreifens. Der Fahrzeugreifen kann ein Reifen für ein Zweirad oder einen Personenkraftwagen oder ein Nutzfahrzeug sein. Ein Fahrzeugreifen für Personenkraftwagen weist beispielsweise in radialer Bauart im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist.

Weitere Merkmale, Vorteile und Einzelheiten der Erfindung werden anhand der Zeichnungen, die schematische Ausführungsbeispiele darstellen, näher beschrieben. Dabei zeigt die
Fig. 1 einen Ausschnitt einer Aufsicht auf die äußere Oberfläche eines Polymerproduktes;
Fig. 2 einen Schnitt entlang A-A der Fig.1 für ein nicht erfindungsgemäßes Polymerprodukt;
Fig. 3 einen Schnitt entlang A-A der Fig. 1 mit erfindungsgemäßen Elementen mit diskretisiertem Höhenprofil;
Fig. 4 eine Seitenansicht eines Fahrzeugluftreifens aufweisend zwei Darstellungen.

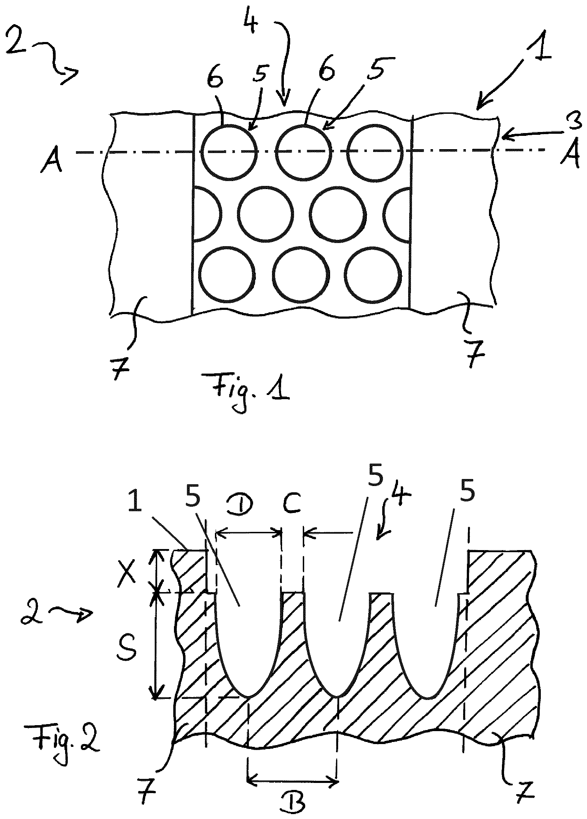

Die Fig. 1 zeigt einen Ausschnitt einer Aufsicht auf die äußere Oberfläche 1 eines Polymerproduktes 2. Die Oberfläche 1 weist eine Darstellung 3 auf, wobei der gezeigte Ausschnitt Teil der Darstellung 3 ist. Die Darstellung 3 weist einen flächigen Bereich 4 auf, der von einem Muster bedeckt ist. Das Muster ist dabei ein zweidimensionales hexagonales Punktmuster, wobei jeder Punkt des Musters ein dreidimensionales Element 5 ist, welches als Vertiefung der Oberfläche 1 ausgebildet ist. Jedes Element 5 weist eine Grundfläche 6 auf, die kreisförmig ausgebildet ist, und erstreckt sich von dort aus bis zu seiner Scheitelhöhe S. Alle Elemente 5 sind dabei gleich ausgebildet. Der Ausschnitt weist auch an den flächigen Bereich 4 angrenzende Bereiche 7 der Oberfläche 1 auf, welche kein solches Muster aufweisen.

Die Fig. 2 zeigt zum Zwecke des leichteren Verständnisses einen Schnitt durch ein nicht erfindungsgemäßes Polymerprodukt 2, welches ein wie in Fig. 1 dargestelltes Muster auf seiner Oberfläche 1 aufweist. Der Schnitt erstreckt sich dabei entlang der in Fig. 1 dargestellten Linie A-A. Die Elemente 5 sind rotationssymmetrisch ausgebildet und haben die Form eines halben gestreckten Ellipsoids, d.h. die Scheitelhöhe S ist größer als der Durchmesser D der Grundfläche 6. Die Scheitelhöhe S beträgt in etwa 0,25 mm, der Durchmesser D beträgt in etwa 0,16 mm, was im Falle der Kreisform auch der maximalen linearen Erstreckung der Grundfläche entspricht. Der Abstand B zum jeweils nächsten Nachbarn beträgt in etwa 0,21 mm, wobei der Abstand B zwischen den geometrischen Schwerpunkten der Grundflächen der Elemente gemessen werden, was im in der Fig. 2 dargestellten Fall dem Abstand B der Scheitelpunkte entspricht. Die Ränder der Grundflächen benachbarter Elemente sind mit C = 0,06 mm beabstandet. Der flächige Bereich 4 aufweisend das Muster ist relativ zu den an den flächigen Bereich angrenzenden Bereichen 7 der Oberfläche 1 in vertikaler Richtung um X abgesenkt, wobei X = 0,1 mm - 0,25 mm gilt.

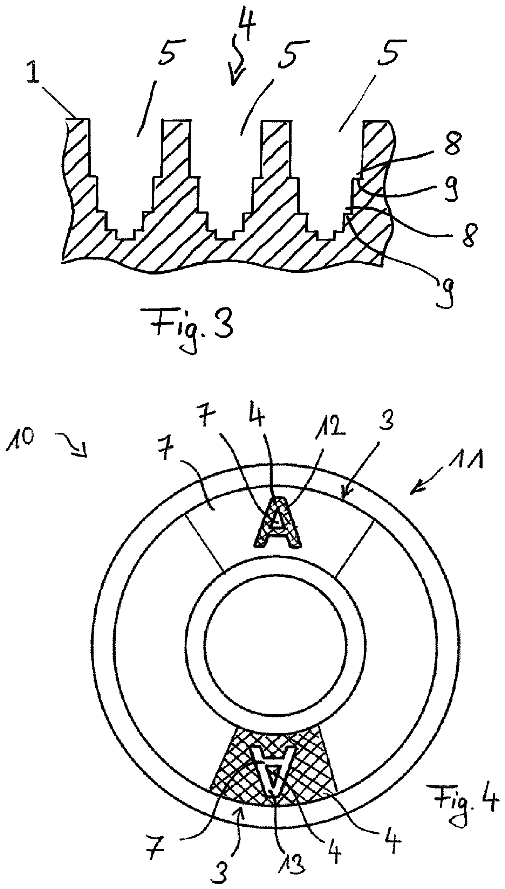

Die Fig. 3 zeigt denselben Schnitt wie Fig. 2 reduziert auf den flächigen Bereich 4, allerdings ist das Höhenprofil der Elemente 5 gemäß der Erfindung diskretisiert. Die Stufenstruktur ist deutlich erkennbar. Jede Stufe 8 weist dabei eine quadratische Stufengrundfläche mit Kantenlänge 9 von 0,02 mm auf. Jede Stufe 8 hat dabei die Höhe von einem von 256 äquidistanten Abstandswerten von 0 bis zur Scheitelhöhe S. Jeder Stufe wird dabei die Höhe zugewiesen, der dem Höhen-Mittelwert des ursprünglichen Elements im von der Grundfläche der Stufe 8 abgedeckten Bereich am nächsten kommt. Die quadratischen Stufengrundflächen eines Elements 5 mit diskretisiertem Höhenprofil bedecken somit zumindest die kreisförmige Grundfläche 6 des ursprünglichen Elements. Die Elemente 5 mit diskretisiertem Höhenprofil sind somit nicht mehr rotationssymmetrisch.

Die Fig. 4 zeigt eine Seitenaufsicht eines Fahrzeugreifens 10. Der Fahrzeugreifen ist in herkömmlicher Weise aufgebaut. In der Seitenaufsicht ist die Oberfläche 1 der Seitenwand 11 des Fahrzeugluftreifens sichtbar. Dieser weist zwei erfindungsgemäße Darstellungen 3 mit jeweils einem Schriftzeichen 12, 13 auf seiner Oberfläche 1 auf. Die vom Schriftzeichen 12 bedeckte Fläche ist durch einen flächigen Bereich 4, der durch ein Muster gemäß Fig. 3 bedeckt ist, gebildet. Der flächige Bereich 4 des Schriftzeichens 12 ist durch einen angrenzenden Bereich 7 umgeben, der kein solches Muster aufweist. Im Gegenzug hierzu ist die das Schriftzeichen 13 umgebende Oberfläche durch einen flächigen Bereich 4 gebildet, der erfindungsgemäß von einem Muster bedeckt ist. Die vom Schriftzeichen 13 bedeckte Fläche ist hingegen durch einen Bereich 7 gegeben, der kein solches Muster aufweist.

### Bezugszeichenliste

### (Teil der Beschreibung)

- 1: Oberfläche
- 2: Polymerprodukt
- 3: Darstellung
- 4: flächiger Bereich der Oberfläche
- 5: Element
- 6: Grundfläche
- 7: angrenzender Bereich der Oberfläche
- 8: Stufe
- 9: Kantenlänge
- 10: Fahrzeugluftreifen
- 11: Seitenwand
- 12, 13: Schriftzeichen

- B: Abstand
- C: Abstand
- D: Durchmesser
- S: Scheitelhöhe
- X: Erstreckung der vertikalen Absenkung

## Patentansprüche

1. Polymerprodukt (2), vorzugsweise ein Fahrzeugreifen (10) mit zwei Seitenwänden (11), wobei zumindest eine Darstellung (3) auf der äußeren Oberfläche (1) des Polymerproduktes (2) angeordnet ist, wobei die Darstellung (3) einen flächigen Bereich (4) aufweist, der von einem Muster bedeckt ist,
• wobei das Muster ein zweidimensionales Punktmuster ist,
• wobei jeder Punkt des Musters ein dreidimensionales Element (5) ist, welches als eine Vertiefung der Oberfläche (1) ausgebildet ist,
• wobei jedes Element (5) eine Grundfläche (6) parallel zur Oberfläche (1) aufweist und sich von dort aus bis zu seiner Scheitelhöhe (S) erstreckt,
• wobei das Muster Elemente (5) mit einer Scheitelhöhe (S) von 0,10 mm bis 0,4 mm, bevorzugt von 0,20 mm bis 0,30 mm, aufweist und
• wobei das Muster Elemente (5) aufweist, deren Abstand (B) zum jeweils nächsten Nachbarn 0,10 mm bis 0,50 mm, bevorzugt 0,15 mm, bis 0,25 mm, beträgt, wobei die Abstände (B) zwischen den geometrischen Schwerpunkten der Grundflächen (6) der Elemente (5) gemessen werden,
**dadurch gekennzeichnet, dass**
• die maximale lineare Erstreckung (D) der Grundfläche (5) jedes der Elemente (5) des Musters 0,1 mm bis 0,35 mm, bevorzugt 0,22 mm bis 0,28 mm, beträgt und
• dass Elemente (5) des Musters eine Substruktur, insbesondere eine sich durch eine Diskretisierung der Höhenprofile der Elemente (5) gebildete Substruktur, aufweisen.

2. Polymerprodukt (2) nach Anspruch 1 **dadurch gekennzeichnet, dass** alle Elemente (5) des Musters gleich ausgebildet sind.

3. Polymerprodukt (2) nach einem oder mehreren der vorangehenden Ansprüche, **dadurch gekennzeichnet, dass** das Muster einem zweidimensionalen Punktgitter, insbesondere einem zweidimensionalen hexagonalen Punktgitter, entspricht.

4. Polymerprodukt (2) nach einem oder mehreren der vorangehenden Ansprüche, **dadurch gekennzeichnet, dass** das Muster rotationssymmetrische Elemente (5), bevorzugt rotationssymmetrische Elemente (5) von der Form eines halben Ellipsoids, einer Halbkugel, eines Kegels, eines Kegelstumpfes oder eines Zylinders, besonders bevorzugt rotationssymmetrische Elemente (5) von der Form eines halben gestreckten Ellipsoids, aufweist.

5. Polymerprodukt (2) nach einem oder mehreren der vorangehenden Ansprüche, **dadurch gekennzeichnet, dass** das Muster einem zweidimensionalen hexagonalen Punktgitter entspricht, dass alle Elemente (5) des Musters als Vertiefung in Form eines gestreckten halben Ellipsoids ausgebildet sind, dessen Durchmesser (D) der Grundfläche (6) maximal 2/3 der Scheitelhöhe (S) beträgt und dass die Elemente (5) dabei eine Substruktur aufweisen, die sich durch eine Diskretisierung des Höhenprofils der Elemente (5) ergibt.

6. Polymerprodukt (2) nach einem oder mehreren der vorangehenden Ansprüche, **dadurch gekennzeichnet, dass** der flächige Bereich (4) relativ zu einem an den flächigen Bereich angrenzenden Bereich (7) der Oberfläche (1) des Polymerproduktes (2) in vertikaler Richtung abgesenkt oder erhöht, bevorzugt abgesenkt, ist.

7. Polymerprodukt (2) nach einem oder mehreren der vorangehenden Ansprüche, **dadurch gekennzeichnet, dass** der flächige Bereich (4) ein Schriftzeichen (12,13) oder ein Firmenlogo ganz oder teilweise darstellt oder dass der flächige Bereich (4) ein Schriftzeichen (12,13) oder ein Firmenlogo ganz oder teilweise umgibt.

8. Polymerprodukt (2) nach einem oder mehreren vorangehenden Ansprüchen, **dadurch gekennzeichnet, dass** dieses ein Kunststoffgehäuse ist oder dass dieses ein Gummiartikel wie ein Fahrzeugreifen (10), bevorzugt ein Fahrzeugreifen (10) welcher den flächigen Bereich (4) auf zumindest einer Seitenwand (11) aufweist, ist.

## Claims

1. Polymer product (2), preferably a vehicle tyre (10) having two sidewalls (11), wherein at least one depiction (3) is arranged on the outer surface (1) of the polymer product (2), wherein the depiction (3) has an extensive region (4) that is covered by a pattern,
- wherein the pattern is a two-dimensional dot pattern,
- wherein each dot of the pattern is a three-dimensional element (5) that is in the form of a recess in the surface (1),
- wherein each element (5) has a base area (6) parallel to the surface (1) and extends from there to its peak height (S),
- wherein the pattern has elements (5) with a peak height (S) of 0.10 mm to 0.4 mm, preferably from 0.20 mm to 0.30 mm, and
- wherein the pattern has elements (5), the spacing (B) of which from the respectively next neighbour is 0.10 mm to 0.50 mm, preferably 0.15 mm to 0.25 mm, wherein the spacings (B) are measured between the centroids of the base areas (6) of the elements (5),
**characterized in that**
- the maximum linear extent (D) of the base area (5) of each of the elements (5) of the pattern is 0.1 mm to 0.35 mm, preferably 0.22 mm to 0.28 mm, and
- **in that** elements (5) of the pattern have a substructure, in particular a substructure formed by discretization of the height profiles of the elements (5).

2. Polymer product (2) according to Claim 1, **characterized in that** all the elements (5) of the pattern are formed in an identical manner.

3. Polymer product (2) according to one or more of the preceding claims, **characterized in that** the pattern corresponds to a two-dimensional dot grid, in particular a two-dimensional hexagonal dot grid.

4. Polymer product (2) according to one or more of the preceding claims, **characterized in that** the pattern has rotationally symmetric elements (5), preferably rotationally symmetric elements (5) in the form of a half ellipsoid, a hemisphere, a cone, a truncated cone or a cylinder, particularly preferably rotationally symmetric elements (5) in the form of a half stretched ellipsoid.

5. Polymer product (2) according to one or more of the preceding claims, **characterized in that** the pattern corresponds to a two-dimensional hexagonal dot grid, **in that** all the elements (5) of the pattern are in the form of a recess in the form of a stretched half ellipsoid, the diameter (D) of the base area (6) of which is at most 2/3 of the peak height (S), and **in that** the elements (5) have a substructure that results from discretization of the height profile of the elements (5).

6. Polymer product (2) according to one or more of the preceding claims, **characterized in that** the extensive region (4) is lower or higher, preferably lower, in a vertical direction relative to a region (7) of the surface (1) of the polymer product (2) that adjoins the extensive region.

7. Polymer product (2) according to one or more of the preceding claims, **characterized in that** the extensive region (4) depicts all or part of a character (12, 13) or company logo, or **in that** the extensive region (4) surrounds all or part of a character (12, 13) or company logo.

8. Polymer product (2) according to one or more preceding claims, **characterized in that** it is a plastics housing, or **in that** it is a rubber article such as a vehicle tyre (10), preferably a vehicle tyre (10) that has the extensive region (4) on at least one sidewall (11).

## Revendications

1. Produit polymère (2), de préférence un pneumatique de véhicule (10) comprenant deux parois latérales (11), au moins une représentation (3) étant disposée sur la surface extérieure (1) du produit polymère (2), la représentation (3) comportant une région plate (4) qui est recouverte par un motif,
• le motif est un motif de points bidimensionnels,
• chaque point du motif est un élément tridimensionnel (5) qui est conçu comme un creux de la surface (1),
• chaque élément (5) comportant une surface de base (6) parallèle à la surface (1) et s'étendant de cette surface de base jusqu'à sa hauteur maximale (S),
• le motif comportant des éléments (5) ayant une hauteur maximale (S) de 0,10 mm à 0,4 mm, de préférence de 0,20 mm à 0,30 mm, et
• le motif comportant des éléments (5) dont la distance (B) au voisin le plus proche est de 0,10 mm à 0,50 mm, de préférence de 0,15 mm à 0,25 mm, les distances (B) étant mesurées entre les centres de gravité géométriques des surfaces de base (6) des éléments (5),
**caractérisé en ce que**
• l'étendue linéaire maximale (D) de la surface de base (5) de chacun des éléments (5) du motif est de 0,1 mm à 0,35 mm, de préférence de 0,22 mm à 0,28 mm, et
• **en ce que** des éléments (5) du motif présentent une sous-structure, en particulier une sous-structure formée par une discrétisation des profils en hauteur des éléments (5).

2. Produit polymère (2) selon la revendication 1, **caractérisé en ce que** tous les éléments (5) du motif sont identiques.

3. Produit polymère (2) selon l'une au moins des revendications précédentes, **caractérisé en ce que** le motif correspond à une grille de points bidimensionnelle, en particulier une grille de points hexagonale bidimensionnelle.

4. Produit polymère (2) selon l'une ou au moins des revendications précédentes, **caractérisé en ce que** le motif comporte des éléments (5) à symétrie de rotation, de préférence des éléments (5) à symétrie de rotation ayant la forme d'une demi-ellipsoïde, d'une demi-sphère, d'un cône, d'un cône tronqué ou d'un cylindre, de manière particulièrement préférée des éléments (5) à symétrie de révolution ayant la forme d'un demi-ellipsoïde allongé.

5. Produit polymère (2) selon l'une au moins des revendications précédentes, **caractérisé en ce que** le motif correspond à une grille de points hexagonale bidimensionnelle, **en ce que** tous les éléments (5) du motif sont conçus comme un évidement sous la forme d'un demi-ellipsoïde allongé dont le diamètre (D) de la surface de base (6) représente au maximum 2/3 de la hauteur maximale (S) et **en ce que** les éléments (5) comporte une sous-structure qui résulte d'une discrétisation du profil en hauteur des éléments (5).

6. Produit polymère (2) selon l'une au moins des revendications précédentes, **caractérisé en ce que** la région plate (4) est abaissée ou augmentée, de préférence abaissée, dans la direction verticale par rapport à une région (7), adjacente à la région plate, de la surface (1) du produit polymère (2).

7. Produit polymère (2) selon l'une au moins des revendications précédentes, **caractérisé en ce que** la région plate (4) représente entièrement ou en partie un caractère (12, 13) ou un logo d'entreprise, ou **en ce que** la région plate (4) entoure complètement ou partiellement un caractère (12, 13) ou un logo d'entreprise.

8. Produit polymère (2) selon l'une au moins des revendications précédentes, **caractérisé en ce qu'**il s'agit d'un boîtier en matière synthétique ou **en ce qu'**il s'agit d'un article en caoutchouc tel qu'un pneumatique de véhicule (10), de préférence un pneumatique de véhicule (10) qui comporte la région plate (4) sur au moins une paroi latérale (11).
